# EUROPEAN PATENT SPECIFICATION

(11) **EP 3 702 139 B1**
(45) Date of publication and mention of the grant of the patent: **22.01.2025**
(21) Application number: 20158165.9
(22) Date of filing: 19.02.2020
(51) Int. Cl.: B29C 70/30, B29C 33/52

(54) **MOLDING METHOD**
FORMVERFAHREN
PROCÉDÉ DE MOULAGE

(30) Priority: 26.02.2019 IT 201900002717
(43) Date of publication of application: 02.09.2020
(73) Proprietor: Giorgia, Daniel, 31044 Montebelluna (TV) (IT)
(72) Inventor: Giorgia, Daniel, 31044 Montebelluna (TV) (IT)
(74) Representative: Citron, Massimiliano

(56) References cited:
- EP-A1- 3 372 366
- FR-A1- 2 937 278
- JP-A- H05 269 783

## Description

The invention mainly refers to a molding method for an object comprising an external layer of composite material, that is, a mix of resin and fiber, laminated on a molding support (core) consisting of an aggregate of microspheres.

It is known to mould objects using an internal core, see e.g. WO2010147982 and WO2012149490, wherein a powder core of plastic microspheres placed free inside a tube of composite is used, both then cooked in a mold.

The cores often have to be removed because they weigh and/or don't have structural function. A method is the *overcooking,* in which the core is cooked until it burns and then is removed by crumbling it. Another very used method is to dissolve the core by injecting into the spindle an agent that chemically dissolves it, and a subsequent washing removes the core reduced to mash. The *overcooking* is a long, expensive process because it requires a lot of energy, and it is a risky process for the damage it can cause to the material arranged around the spindle. The use of a solvent is certainly faster, and gives good results especially with PVC microspheres and/or vinyl compounds. The solvent dissolves the shell of the microspheres and disintegrates the vinyl binder between the microspheres, i.e. other microspheres.

Dimethylformamide (DMF) or acetone is currently used as a solvent, but they are toxic and - above all - evaporate very quickly, which is why high quantities thereof or particular controlled-ventilation environments are required.

FR 2 937 278 discloses a method of producing a piece of composite material.

The main object of the invention is to solve at least one of the aforementioned drawbacks.

According to an aspect of the invention, a method is proposed for producing an object made of composite material made up of fibers impregnated with resin,
the material being laminated on a rigid supporting core before the curing in the mold,
the core being composed of expanded particles and unexpanded particles, the core being made up of 20-50% by weight of expanded particles (microspheres) and 80-50% of unexpanded particles (microspheres),
wherein after heating and curing of the composite material the core is dissolved by means of a solvent,
the solvent being a sulfoxide, i.e. a chemical compound containing a sulphenyl functional group attached to two hydrocarbon groups.

In particular, dimethylsulfoxide (DMSO) - also known as methylsulphoxide - is used as a solvent.

The application of a sulphoxide in the context of the disintegration of cores for molding has given surprising advantages.

A first advantage is the simplification of the work environment, thanks to the nontoxicity of the solvent.

A second advantage is the reduction in the amount of solvent used and of processing times. This solvent takes less time to break up the core because, being high-boiling (190 C°), does not disperse or evaporate in the environment but instead continuously performs its lithic action on the core until it has completely disintegrated and washed the core away.

Another advantage is the simplification of the washing step of the mold or of the inside of the molded piece. All rinsing operations for cleaning machines used for the molding process and/or dissolution of the core can be done with water, in a simple and economic manner, because the insolubility in water of the solvent allows washing it away easily after the disintegration. is completed.

Another advantage is the ease of dosing it by dilution in water.

The core can be massive, that is, solid without internal voids, or have some internal cavities.

By *composite material* it is meant in particular a class of materials consisting of several intimate and connected phases, but distinguishable on a macroscopic scale, such as in particular
- fibrous composites, having a three-dimensional continuous phase, the matrix, which incorporates a one-dimensional discontinuous phase, a fiber (e.g. glass or carbon fiber), which can be discontinuous (*whisker*) or continuous (*fiber*);
- particle composites, consisting of particles of a material suspended in a matrix of a second material;
- pre-impregnated (*pre-preg*) composites, already soaked in resin.

Preferably the core is expanding inside the curing mold.

Preferably the core is adapted to be first laminated with composite material, in order to achieve many advantages, among which
- to be able to easily laminate a support having its own shape,
- to press the composite against the walls of the mold for an optimum copying of the mold;
- to favor the interpenetration between core and composite material obtaining a more resistant object;

- to laminate complex shapes with continuity and thereby achieving monolithic objects;
- to be able to add or insert into the core (mechanical and/or structural) inserts during the lamination without having to consider the limits of the existing technology;
- to expel excess resin (matrix) from the curing mold by means of the pressure exerted by the core on the layer of composite material;
- to produce a low-cost resistant core in a simple and repeatable way,

Preferably the core is expanded by heating, thereby exploiting the curing temperature.

The aforementioned core is made through molding, by molding a material, e.g. a powder or granular or cellular material. In the category of powdered or granular or cellular material, preferably for the core the cellular material described in WO 2012/140474 is used. The basic formula of the cold material, i.e. before the heating in the mold, is 20-50% by weight of expanded particles (microspheres) and 80-50% of unexpanded particles (microspheres). The cellular material solidifies following the heating in the mold. Once solidified it can re-expand if its temperature is brought between about 100 and 200 °C, in particular up to 160 °C. The material offers the advantage, essential for the application as a core, that it manages to expand every time it is heated, thereby improving the shaping and molding of the layer in composite material. It starts expanding at about 110 °C.

The expansion temperature (Texp) can change slightly with the percentages of the composition and/or with the thickness of the core to be molded.

Physically it happens that with the heat of the curing mold, in which the composite hardens, all the little spheres expand (the expanded ones expand less, though). The unexpanded microspheres or little spheres are made of plastic material, and are closed little spheres. They are hollow and full of gas that expands when heated, dilates the little sphere and decreases the overall density of the material.

The expanded microspheres are e.g. in plastic material, in particular made of thermoplastic acrylic resin. They are closed spheres, hollow and filled with gas; and act as a binder or filler for the other little spheres. In fact, the expanded little spheres are the filling element (*filler*), the unexpanded ones act as a binder.

The unexpanded particles can be replaced with another binding material or component e.g. a glue, and/or any viscose glue e.g. polyurethane, in which case the production system should be consequently changed, and the yield may vary.

Important characteristics of the microspheres:
- they are closed little spheres, because the closed structure allows absorbing and disperse energy;
- they have low density and therefore they are light;
- they can stick to each other creating a compact material.

Little spheres that can be used for the invention are e.g. contained in the material Expancell^{®}. The particles generally have a spherical shape and are very small (10-40 µm in diameter). Note however that the size is not essential.

## Claims

1. Method for producing an object made of a composite material made up of fibers impregnated with resin,
the material being laminated over a rigid supporting core before the curing in a mold,
the core being made by moulding and being composed by weight of 20-50% of expanded particles and 80-50% of unexpanded particles,
wherein, after heating and curing of the composite material, the core is dissolved by means of a solvent,
the solvent being a sulphoxide, i.e. a chemical compound containing a solfenyl functional group attached to two hydrocarbon groups.

2. Method according to claim 1, wherein the solvent is dimethylsulfoxide, DMSO.

3. Method according to any one of the preceding claims, wherein the composite material is a pre-impregnated composite, pre-preg, already soaked in resin.

4. Method according to any one of the preceding claims, wherein the core is expanding inside the curing mold.

5. Method according to claim 4, wherein the core is expanded by heating, thereby exploiting the curing temperature.

6. Method according to claim 4 or 5, wherein the temperature of the core material is brought between about 100 and 200 °C so that, once solidified, the core material re-expands.

7. Method according to claim 6, wherein said temperature is up to 160 °C.

## Patentansprüche

1. Verfahren zur Herstellung eines Gegenstandes aus einem Verbundwerkstoff aus mit Harz imprägnierten Fasern,
das Material vor dem Aushärten in einer Form über einen starren Stützkern laminiert wird, der Kern durch Formen hergestellt wird und zu 20-50 Gewichtsprozent aus expandierten Partikeln und zu 80-50 Gewichtsprozent aus nicht expandierten Partikeln besteht,
wobei nach dem Erhitzen und Aushärten des Verbundwerkstoffs der Kern mittels eines Lösungsmittels aufgelöst wird,
dem Lösungsmittel handelt es sich um ein Sulfoxid, d. h. eine chemische Verbindung, die eine Solfenyl- Funktionsgruppe enthält, die an zwei Kohlenwasserstoffgruppen gebunden ist.

2. Verfahren nach Anspruch 1, wobei das Lösungsmittel Dimethylsulfoxid DMSO ist.

3. Verfahren nach einem der vorhergehenden Ansprüche, wobei es sich bei dem Verbundmaterial um einen vorimprägnierten Verbundwerkstoff, Pre-preg, handelt, der bereits mit Harz getränkt ist.

4. Verfahren nach einem der vorhergehenden Ansprüche, wobei sich der Kern innerhalb der Aushärteform ausdehnt.

5. Verfahren nach Anspruch 4, **dadurch gekennzeichnet, dass** der Kern durch Erhitzen unter Ausnutzung der Aushärtetemperatur expandiert wird.

6. Verfahren nach Anspruch 4 oder 5, wobei die Temperatur des Kernmaterials auf einen Wert zwischen etwa 100 und 200 °C gebracht wird, so dass sich das Kernmaterial nach der Verfestigung wieder ausdehnt.

7. Verfahren nach Anspruch 6, wobei die Temperatur bis zu 160 °C beträgt.

## Revendications

1. Procédé de fabrication d'un objet en matériau composite constitué de fibres imprégnées de résine,
le matériau étant laminé sur un noyau de support rigide avant le durcissement dans un moule,
le noyau étant réalisé par moulage et étant composé en poids de 20 à 50 % de particules expansées et de 80 à 50 % de particules non expansées,
dans lequel, après chauffage et durcissement du matériau composite, le noyau est dissous au moyen d'un solvant,
le solvant étant un sulfoxyde, c'est-à-dire un composé chimique contenant un groupe fonctionnel solfényle lié à deux groupes hydrocarbonés.

2. Procédé selon la revendication 1, dans lequel le solvant est le diméthylsulfoxyde DMSO.

3. Procédé selon l'une quelconque des revendications précédentes, dans lequel le matériau composite est un composite pré-imprégné, pre-preg, déjà imbibé de résine.

4. Procédé selon l'une quelconque des revendications précédentes, dans lequel le noyau se dilate à l'intérieur du moule de durcissement.

5. Procédé selon la revendication 4, dans lequel le noyau est expansé par chauffage, exploitant ainsi la température de durcissement.

6. Procédé selon la revendication 4 ou 5, dans lequel la température du matériau du noyau est amenée entre environ 100 et 200 °C de sorte que, une fois solidifié, le matériau du noyau se redétend.

7. Procédé selon la revendication 6, dans lequel ladite température est jusqu'à 160 °C.
